# EUROPEAN PATENT SPECIFICATION

(11) **EP 0 645 631 B1**
(45) Date of publication and mention of the grant of the patent: **28.11.2001**
(21) Application number: 94114927.0
(22) Date of filing: 22.09.1994
(51) Int. Cl.: G01N 35/02, G01N 35/10, G01N 1/00, G01N 1/38

(54) **APPARATUS FOR AND METHOD OF AUTOMATIC SAMPLE TESTING**
VORRICHTUNG UND VERFAHREN ZUR AUTOMATISCHEN PRÜFUNG VON PROBEN
DISPOSITIF ET METHODE D'ESSAI AUTOMATIQUE D'ECHANTILLONS

(30) Priority: 29.09.1993 US 129237
(43) Date of publication of application: 29.03.1995
(73) Proprietor: Becton, Dickinson and Company, Franklin Lakes, New Jersey 07417-1880 (US)
(72) Inventor: Uffenheimer, Kenneth F., Los Gatos, California 95030 (US)
(74) Representative: Selting, Günther, Dipl.-Ing.

(56) References cited:
- EP-A- 0 109 198
- EP-A- 0 360 487
- EP-A- 0 418 026
- WO-A-86/02626
- FR-A- 2 076 797
- FR-A- 2 514 504
- US-A- 5 133 936
- PATENT ABSTRACTS OF JAPAN vol. 6 no. 38 (P-105) [916] ,9 March 1982 & JP-A-56 154667 (OLYMPUS)

## Description

### BACKGROUND OF THE INVENTION

This application in general relates to an automatic system for and to a method of testing blood samples.

Various types of sample testing systems are known in the prior art. Typically, the known systems receive a single sample vial containing a body fluid specimen such as blood, and are utilized to take a portion of that sample and dispense it into a reaction tube with a reagent. The fluid within the reaction tube is then removed for testing at a subsequent location.

While systems have been proposed which automatically remove a sample from a tube and send that sample for testing, such systems have typically not proven practical. Problems are associated with moving and properly metering the equired sample fluid, the reagent, and a diluent, which is typically necessary for moving the sample. The required flow logics incorporated into these systems have beer unduly complicated, and thus not practically utilized in production testing equipment.

In other systems a reagent and the sample are aspirated separately into a probe with an intermediate wash. The intermediate wash is necessary to eliminate cross-contamination between the samples and reagent.

EP-A-0 360 487 discloses a system for testing samples, comprising a plurality of sample vials and a plurality of reagent bottles, as well as a coresponding testing method. The sample and the reaqent are delivered by two separate probes into a reaction tube for mixing the sample and the reagent. With a third probe, the sample and the reagent are moved to a flow cell for subsequent testing.

Further, the field of flow cytometry involves the use of a flow cell to test a fluid sample. The test parameters and logics used with flow cytometry are known in the art. Flow cytometry has not been typically utilized on an automatic basis, or with production testing equipment. Rather, flow cytometry has been utilized in lab situations on a more experimental basis. It would be desirable to develop a system which incorporates flow cytometry into an automatic unit.

### SUMMARY OF THE INVENTION

The invention provides a method of testing a sample fluid, comprising the following steps:
a. providing a plurality of samples on a sample carousel,
b. providing at least one reagent to form a mixture of one of said samples and said reagent,
c. removing at least a portion of one of said samples and said reagent,
d. dispensing said sample and said reagent into an incubation tube using a diluent mixed with air bubbles,
e. incubating said mixture for a predetermined period of time,
f. removing at least a portion of said mixture from said incubation tube after said predetermined period of time has elapsed and injecting said removed portion of said mixture into a flow cell, and
g. testing said removed portion of said mixture.

The invention also provides a system for testing a plurality of samples, comprising:
a. a sample carousel for holding a plurality of sample vials,
b. a sample aspiration system for removing a sample from each of said sample vials,
c. a reagent container containing a quantity of reagent,
d. an incubation tube carousel holding a plurality of incubation tubes,
e. a flow cell for performing flow cytometry on removed samples,
f. a first probe operable to deliver a quantity of sample removed from one of said sample vials and a quantity of reagent into one of said incubation tubes on said incubation carousel,
g. a diluent reservoir and an air compressor to deliver diluent mixed with air bubbles into said first probe, and
h. a second probe operable to remove a quantity of said sample and reagent from an incubation tube and deliver said removed sample and reagent to said flow cell.

In a disclosed embodiment of this invention, an automated sample preparation system receives a carousel with a plurality of sample tubes. Those samples are indexed to be aligned with a needle which removes a portion of the sample and dispenses that portion into an incubation tube along with a test reagent. The test reagent is automatically removed from a reagent carousel and dispensed into the incubation tube through a probe. A test probe removes the fluid from the incubation tube after appropriate processing and sends that fluid to a flow cytometry flow cell which analyzes the removed sample.

In a main aspect of this invention, a flow system for moving the sample and reagent into the incubation tube includes injecting air bubbles into a fluid stream from a diluent pump which aspirates the reagent from the reagent carousel, and hen drives the air bubbles, a diluent, the reagent, and the sample through a valve, a conduit and a probe and into the incubation tube. The air bubbles facilitate the movement of those fluids into the incubation tube, thus decreasing the amount of diluent which is necessary. The timing of the bubble injection may be controlled to ensure that all bubbles are ejected. This allows an accurate prediction of the amount of diluent in the incubation tube. By decreasing the amount of diluent, the reaction time for the incubation between the reagent and the sample is decreased, and the amount of samples which may be tested by the system is increased.

In a main feature of this invention, a flow cytometry test system is positioned downstream of an injection port from an injection probe, which removes the sample from an incubation tube. Thus, flow cytometric testing is ongoing, and samoles are continuously being prepared, incubated, and injected into the flow cell for testing.

In another aspect of this invention, a reagent probe removes a port on of a reagent into a tip of the probe, and a fluid system brings the sample from a sample vial upstream of the tip of the reagent probe to the reagent probe. The sample is aspirated from a sample vial which is pierced by a needle, and a metered amount of the sample is aspirated into a fluid circuit associated with the needle, and between the needle and reagent probe. That metered amount is then dispensed to the reagent tip and is injected into an incubation tube along with the reagent. The use of the reagent probe, which brings the reagent into its tip and brings a sample that is upstream of its tip toward its tip, allows precise metering of both the reagent and the sample. This allows cc ncurrent aspiration of sample and reagent and also simplifies the wash structure.

These and other features of the present invention can be best understood from the following specifications and drawings, of which the following is a brief description.

### BRIEF DESCRIPTION OF THE DRAWINGS

Figure 1 is a perspective view of an apparatus according to the present invention.

Figure 2 is a plan view of a portion of the apparatus shown in Figure 1.

Figure 3A is a partially schematic view of the flow system for a portion of the apparatus shown in Figure 1.

Figure 3B shows a subsequent position for a portion of the system shown in. Figure 3A.

Figure 3C shows yet another position for the system shown in Figure 3A.

Figure 3D shows another embodiment of one valve as shown in the system of Figure 3A.

Figure 4 shows details of a portion of the system shown in Figure 2.

Figure 5 shows a portion of the apparatus according to the present invention.

Figure 6 shows the analysis section of the apparatus according to the present invention.

### DESCRIPTION OF THE PREFERRED EMBODIMENTS

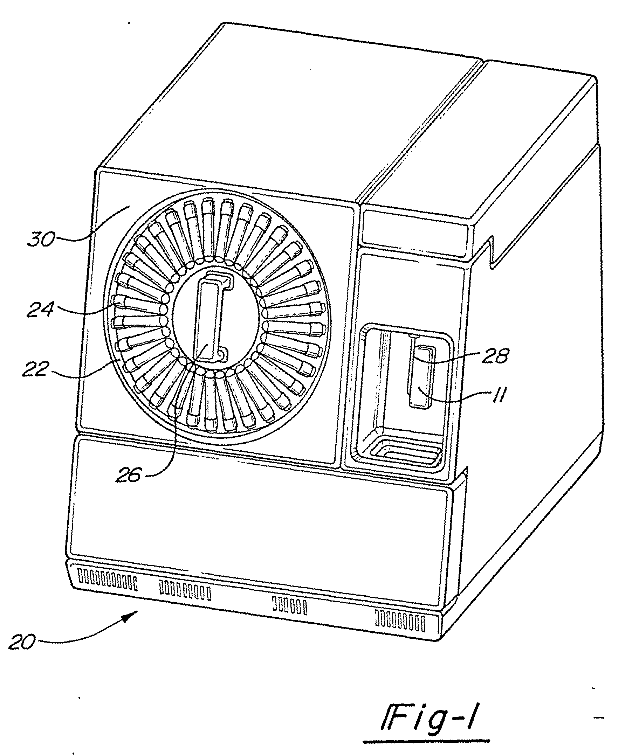

An apparatus 20 is shown in Figure 1 for automatically removing a portion of a body fluid sample from a sample vial 24 in a sample carousel 22, preparing that removed portion for test analysis, and subsequently analyzing the sample. A handle 26 facilitates removal and attachment of the carousel 22 to the apparatus 20. The structure for mounting the carousel to the apparatus 20 is known, as is a drive, which moves carousel 22 to be indexed with a needle for removing the sample, and forms no portion of this invention. A manual sampling probe 28 may be utilized for removing a sample from open individual tubes which are not mounted to a carousel. A switch 11 is actuated to convert the system to manual operation and initiates sample aspiration. The body 30 of the apparatus 22 encloses a number of systems and subsystems such as will be disclosed below.

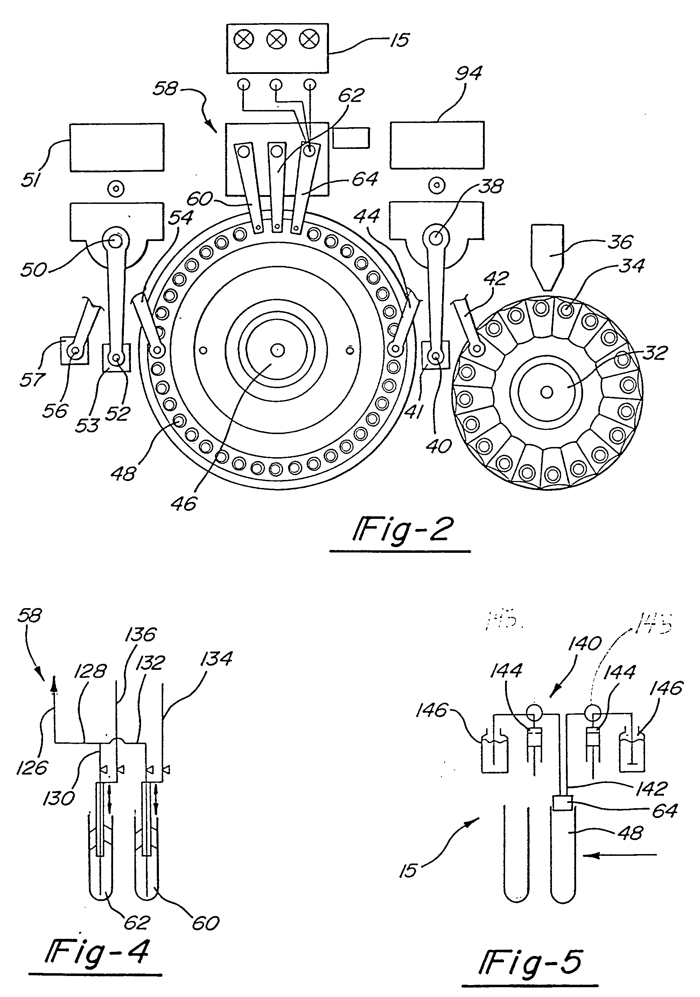

Figure 2 shows a reagent carousel 32 including a plurality of reagent containers 34. Preferably, each reagent container 34 is encoded with a bar code which is read by bar code reader 36 to identify the particular reagent. A reagent probe 38 has a end 40, shown above wash reservoir 41. End 40 is moved to a position 42 for removal of a reagent from a reagent container 34. Probe 38 moves upwardly and downwardly (into and out of the paper as shown in this figure) and may also pivot such that it may be moved over a reagent container 34 and then moved downwardly into that container for removal of a reagent. As also shown, the reagent probe 38 is pivoted to he position 34 where it may dispense fluids into incubation tubes 48 on an incubation carousel 46.

Thus, the reagent probe 38 pivots between the position 42 where it removes the reagent, to the position 44 where it dispenses that reagent, and other fluids, as will be explained below, and then subsequently moves into the wash reservoir 41 for cleaning. As will be disclosed below, the reagent probe 38 dispenses not only a reagent into the incubation tubes 48, but also a portion of a sample of body fluid which is to be tested.

An injection probe 50 includes an end 52 which moves to a position 54 where it is positioned above an incubation tube 48 for removal of the fluid within the incubation tube 48. The end 52 is also moved into a wash reservoir 53, and to a position 56 where it is positioned over an injection port 57. The injection port 57, as will be explained below, leads to a flow cytometry analysis system which analyzes the prepared sample that was removed from the incubation tube 48. Probe 50 like probe 38, moves upwardly and downwardly to be immersed in the various liquids, and may also pivot between the illustrated positions.

A wash system 58 includes probes 60 and 62 for washing and ther drying the incubation tubes. Alternatively, only one probe, or three or more probes, may be necessary.

Ancillary reagent probe 64 is connected to a pumping system 15 which may selectively deliver several different fluids including lysing agents, buffering fluid, fixatives, additional reagents or any other appropriate fluids to the sample and reagent contained within the incubation tubes.

During operation, reagent probe 38 automatically and continuously removes a portion of a selected reagent from any of the reagent containers 34 on reagent carousel 32 and dispenses that reagent along with a test sample into an incubation tube 48 on incubation carousel 46. Injection probe 50 automatically and continuously removes samples from incubation tubes 48 after sufficient time has been allowed for incubation of the combined sample and reagent (and any other included fluids, buffering fluids, etc.), and injects the prepared sample into an injection port 57 which is connected to an analysis system. The probes 38 and 50 are washed in similar wash reservoirs 41 and 53 after each dispensing. The tube wash system 58 cleans the incubation tubes after the combined preparation has been removed for testing so that the tubes may be reused for continuous processing of new samples.

Figure 3A shows the flow structure for delivering the sample and reagent. As shown, a moveable needle platform 66 carries a needle 68, a mount portion 70 and a guide 71. As the sample tubes 24 on the sample carousel 22 move to be aligned with the guide 71, the platform 66 is advanced until guide 71 receives the end of tube 24. Guide 71 shields needle 68 and also guides the tube 24. An opening in the body 30 approximately at 5:00 o'clock in Figure 1 allows access between guide 71 and the sample carousel 22. When platform 66 is advanced, a needle drive 12 and needle 68 are retracted. The needle and drive 12 are advanced once guide 71 is received on tube 24 and the needle 68 punctures the septum 72 in the sample tube 24.

The needle communicates with a rinse conduit 74, a valve 76, a rinse pump 77 and a rinse fluid reservoir 78. When valve 76 is moved to connect conduit 74 to pump 77, rinse fluid may be directed into a chamber 79 surrounding needle 68 for cleaning, as will be explained below. An aspiration or sample conduit 80 leads through a selector valve 81. As shown, selector valve 81 connects conduit 80 to a conduit 82 leading to a shear valve 83. As will be explained below, selector valve 81 may be actuated to a position where it connects conduit 19 to conduit 82 when a manual sample is being taken through probe 28.

Shear valve 83 selectively connects conduit 82 to conduit 84 through sample passage 13. Conduit 84 leads to a vent/aspiration valve 85 which selectively connects conduit 84 to a conduit 86 leading from a check valve 17 to atmosphere, or alternatively, valve 85 connects conduit 84 to an aspiration conduit 87 leading to a waste pump 88 which is connected to a waste reservoir 89. A conduit 90 is shown connecting a passage 14 in the shear valve 83 to the reagent probe 38. As shown, reagent probe 38 can move upwardly and downwardly and also pivot above the wash reservoir 41, the reagent carousel 34, and the incubation carousel 48.

A conduit 92 is shown connecting a passage 14 in shear valve 83 to a diluent valve 93. Diluent valve 93 is shown connecting T conduit 92 to a diluent pump 94. Alternatively, valve 93 may be rotated to a position where it connects diluent pump 94 to a diluent reservoir 96. A valve 98 connects an air compressor 99 to conduit 92 through a T connection. Alternatively, valves 98 and 98' block flow from the air compressor 99 to the conduit 92. As will be explained below, this allows air bubbles to be injected into a diluent flow from diluent pump 94, which in turn facilitates movement of fluids through shear valve 83, reagent probe 38, and into the incubation tubes 48.

In operation, as will be explained below, when pump 94 begins to move a diluent to probe 38, the movement of diluent pump 94 is precisely controlled. Preferably, a motor for diluent pump 94 would be a stepper motor or servo-motor, the position of which may be closely monitored. The valves 98 and 98' are alternately opened and closed to serially trap compressed air between the two valves. Thus, cyclic air bubbles are injected at T 92 and into the flow of diluent such that the fluid moving through valve 83 includes separate and distinct slugs of diluent and then an air bubble. The volume of the air bubbles is controlled by the volume between valve 98 and 98' and the pressure developed by the compressor. Alternatively, it may be possible to use a single valve and still closely control the amount of air being injected through the valve 83. As will be explained below, the air bubbles facilitate the removal of sample through the shear valve 83 and reagent from the probe tip 40.

Conduit 100 extends through a flow restricter 102, a valve 104, and rinse sleeve 106, all of which are associated with the manual sampling probe 28, to rinse the manual sampling probe 28, and associated passages etc. after use.

The rinse sleeve 106 may be movable upwardly and downwardly on probe 28. Thus, when rinsing probe 28, one moves sleeve 106 downwardly on the probe 28, while injecting a rinse fluid through passage 100, and open valve 104. At the same time, valve 108 is opened and suction is applied to the sleeve 106. Thus, the rinse fluid rinses the exterior of the probe 28, and is taken away to the waste container 89. Eventually, the sleeve 106 reaches the bottom of probe 28. At that time, valve 81 is rotated from the position shown in Figure 3A, and valve 85 is also rotated from the position shown in Figure 3A. Suction is applied from the pump 88, and rinse fluid is drawn through probe 28, and its associated passageways to the waste container 89. Finally, the rinse fluid pumping ceases, and air drying of the flow path is achieved. As an alternative to the movable sleeve 106, the probe 28 may be retractable into the sleeve 106.

During typical automated operation, valve 104 and valve 81 remain in the position shown in Figure 3A, thus isolating the manual sampling probe 28 from the remainder of this system. In addition, a valve 108 blocks communication between waste pump 88 and sleeve 106. A valve 109 connects the wash reservoir 41 though a conduit 110 to the waste pump 88. A similar waste line is connected to wash reservoir 53 (see Figure 2). Valves 104 and 81 are actuated by actuation of switch 11.

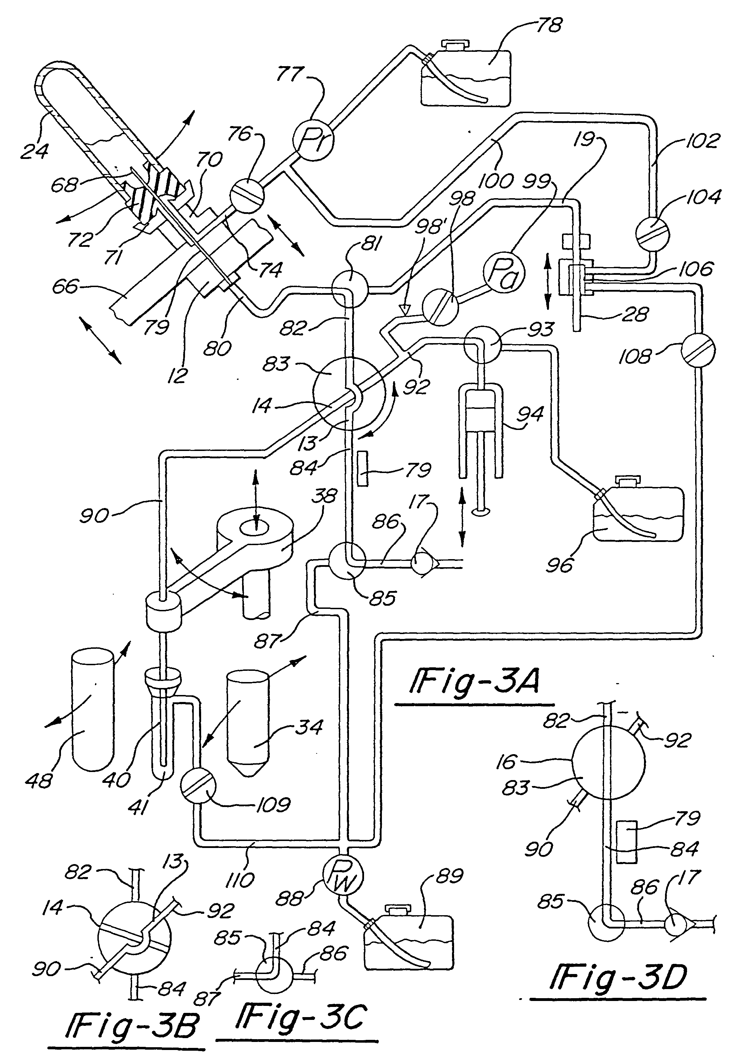

Figures 3B and 3C show the valves 83 and 85 in positions other than those shown in Figure 3A, during portions of the operation of the inventive system. The operation of the system to remove a sample from a sample tube 24 and dispense that sample along with a reagent and a diluent into an incubation tube 48 will now be described with reference to Figures 3A, 3B and 3C.

In an initial position, shear valve 83 and vent/aspiration valve 85 are positioned as shown in Figure 3A. A new sample tube 24 is indexed to be aligned with mount portion 70. A bar code reading on the tube may be performed to determine what type test will be run. Needle 68 is driven through the septum 72 in sample tube 24. Valve 85 and shear valve 83 are in position shown in Figure 3A, such that atmosphere communicates through the check valve 86, conduit 84, passage 13, conduit 82, conduit 80 and into the interior of sample tube 24, Sample tube 24 is thus relieved of any excess vacuum. The vent/aspiration valve 85 is then rotated to the position shown in Figure 3C, and waste pump 88 is actuated to draw a sample from sample tube 24, through needle 68, conduit 80, conduit 82, into passage 13 in shear valve 83, and conduit 84. When a conductivity detector cell 79 senses the leading edge of a sample slug, the vent/aspiration valve 85 is returned to the position shown in Figure 3A and waste pump 83 is deactuated. Needle 68 is withdrawn from the sample tube 24.

During the same time, the probe 38 is positioned over a particular reagent container which is selected in view of the particular test which is to be performed on this sample. The probe is lowered into the reagent container 34. The diluent pump 94 is further retracted and a quantity of reagent is aspirated into the tip 40 of probe 38 by suction applied through passage 14 and conduit 90.

Shear valve 83 is then rotated to the position shown in Figure 3B, with a portion of the sample trapped in the sample loop passage 13 in the shear valve 83. Probe 38 is then moved over an incubation tube 48. Diluent pump 94 is moved forwardly to drive the reagent, the diluent, the sample and the injected air bubbles through the dispensing end 40 and into the incubation tube 48. The air facilitates this dispensing action.

As explained above, the valves 98 and 98' are alternately opened and closed such that selective known quantities of air are delivered to T 92. Thus, the fluid moving through passage 13, and into passage 90, will consist of a plurality of spaced slugs of diluent and air. It is known that a thin film of liquid will slip by the air bubbles as they move through the flow passage. Each successive slug of diluent further dilutes this fluid such that the final sample carryover remaining in the passage 90 will be quite small. It is further preferred that the timing of the final air bubble generated at T 92 be selected such that the final dispensed volume of diluent sweeps that bubble through passage 90 and out of probe tip 40. By not having any trapped air bubbles in passage 90, or in shear valve 83, the quantity of diluent which will be injected into the subsequent incubation tube 48 will be able to be predicted with a good degree of accuracy.

Shear valve 83 is then rotated back to the position shown in Figure 3A, with valve 85 actuated to the position shown in Figure 3C. Valve 76 is rotated from the position shown in Figure 3A, and rinse pump 77 is actuated to supply rinse fluid from container 78 to the sleeve 79 surrounding the needle 68. At the same time, waste pump 88 is actuated such that the rinse fluid is removed from the sleeve 79 through the needle 68 and to the waste reservoir 89. Rinse pump 77 is turned off and valve 75 is rotated back to the position shown in Figure 3A, while waste pump 88 continues to run for a period of time drawing air to dry the sample loop. Diluent pump 94 is charged with diluent by rotating valve 93 from the position shown in Figure 3A, and again retracting the pump 94. Reagent probe 38 is positioned into wash reservoir 74 and the diluent pump 94 is discharged to clean the probe tip exterior and flush residual sample and reagent from the conduit 90, and the probe tip 40 into the wash reservoir 41. Valve 109 is rotated such that waste pump 88 can remove this fluid through line 110 and to the waste reservoir 89.

Shear valve 83 is positioned as shown in Figure 3B, and vent/aspiration valve 85 is positioned as shown in Figure 3C. Waste pump 88 is actuated, and the sample flow path through needle 68, conduit 80, conduit 82, conduit 84 and conduit 87 is air dried. Valve 93 is rotated from the position shown in Figure 3A such that it connects pump 94 and container 96. Pump 94 is retracted and aspirates diluent from container 96 into the chamber of diluent pump 94.

The vent/aspiration valve 85 remains in the position shown in Figure 3C, the waste pump 88 is actuated, and the passage 13 is again air dried. The waste pump 88 is turned off, and the vent/aspiration valve 85 is moved to the position shown in Figure 3A.

Valve 93 is rotated from the position shown in Figure 3A and the diluent pump 94 is retracted to again aspirate a quantity of diluent from diluent container 96. The system is then ready to begin the cycle again to prepare another sample.

An alternative shear valve 16 is illustrated in Figure 3D. As shown, a single passage 17 for connecting the lines 90 and 92 is used rather than the two passages as shown in Figure 3A. The single passage 17 is rotated to connect the lines 82 and 84, and 90 and 92 as required.

Another advantage of this invention illustrated in Figures 3A-3C is that the reagent is being aspirated into the end 40 of the reagent probe 38 while the sample is being simultaneously aspirated upstream of the reagent probe 38, and into the line leading to the reagent probe 38. Further, the reagent and sample are simultaneously dispensed. Prior systems have typically aspirated both the reagent and sample into the probe tip. By moving the reagent into the probe tip, and moving the sample from a position upstream of that probe tip towards the probe tip, one is better able to meter and control the amount of sample and reagent being dispensed, and further may process more samples in a particular period of time.

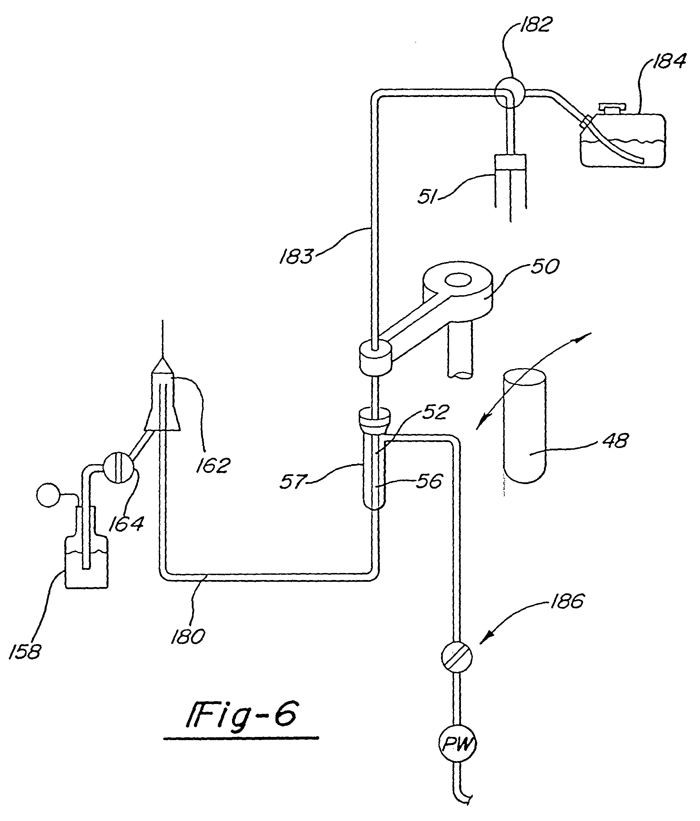

As shown in Figure 4, the incubation tube wash system 58 includes probes 60 and 62. Probe 60 receives a first rinse fluid through conduit 134, which begins to rinse any remaining sample from the tube. Probe 60 is also connected to a suction conduit 126 through a conduit 132. The probes 60 and 62 are moved upwardly out of tubes 48, and downwardly into the incubation tubes 48, as required. As the probe 60 finishes cleaning incubation tube, that incubation tube is indexed towards the probe 62. A second rinse solution 136 is injected into incubation tube 48 through probe 62, and suction is also applied through conduit 130. By the time the incubation tube has moved beyond probe 62, it is cleaned and adequately dried such that it may be reused for a subsequent sample preparation. It should be understood that required pumps would be attached to the lines 126, 134 and 136. As stated above, it is possible to clean the used incubation tubes with a single probe, or with three or more probes.

Details of the probe 64 and pumping system 15 are illustrated in Figure 5. As shown, lysing or buffering fluids may be driven through conduits 142 from pumps 144 having valves 145 selectively communicating containers 146 to pumps 144, and selectively communicating pumps 144 to conduits 142. Probe 64 is a multi-lumen probe which may contain several conduits 142. Thus, the lysing fluid or the buffering agent may be dispensed into the incubation tubes 48 between the time the tubes receive the reagent from probe 38, and when the probe 50 aspirates the fluid from the tubes. The lysing fluid and/or buffering agent would be dispensed into the incuba ion tube to dilute the fluid in the incubation tube after sufficient time has elapsed such that it can be assumed that the tube sample has fully reacted. The incubation carousel 46 would be indexed such that an appropriate tube 48 is aligned with probe 64 at an appropriate time to receive the additional fluids.

The reagent carousel 32, the incubation carousel 46, and the sample carousel 22 are attached and driven with known mechanical connections and controls. Further, each of the carousels are connected to a drive such that they may be indexed relative to the probes to serially bring each of the tubes on the particular carousel into alignment with the particular probes.

The timing of the dispensing of the lysing agent, or the buffering agent, and the timing between the incubation tubes 48 receiving the reagent and sample, until the time when the probe 50 removes the sample for testing, may all be determined depending on the parameters of the particular tests, samples, and reagent. Determination of the required times are well within the skill of a worker in this art.

As shown in Figure 6, probe 50 is connected to a pump 51 which is selectively communicated by a valve 182 to the probe tip 56, or alternatively to a diluent reservoir 184. Passage 183 is initially filled with diluent from reservoir 184. With valve 182 in the illustrated position, pump 51 is retracted with probe 50 open to the air. An air bubble is aspirated and the probe is moved into an incubating tube. A sample is aspirated into the probe tip.

Once a sample has been aspirated into probe tip 56, probe 56 is moved over and into the injection port 57. The tip is sealably engaged directly to line 180. The sample is then injected into injection port 57, through line 180, and into a flow cell 162. Pump 51 injects the fluid and is stopped prior to the diluent leaving the tip. As is known the flow cell analyzes the sample during this injection. As shown, a source of sheath fluid 158 is connected through a valve 164 to the flow cell 162. The structure and use of flow cell 162 and the sheath fluid are as known in the art.

The injection port 57 may also be utilized as a wash reservoir for the probe tip 56 by connecting a waste system 186 to injection port 57. Once the sample is injected, the probe is disconnected from line 180, and pump 51 dispenses the diluent from the probe tip to flush the remaining sample out of the probe tip. The diluent rinses the outside of the probe and is removed by waste system 186.

It is also envisioned, that a separate station can be positioned adjacent to injection port 57 such that a sample which has been prepared at a remote location can be utilized in connection with injection probe 50. This would be useful should a sample be prepared elsewhere, or should it be necessary to recheck a particular incubation tube which has been removed from the incubation carousel for any reason.

The use of the injection port in combination with the flow cytometry equipment provides the ability to automatically and rapidly perform testing with flow cytometry. Until this time, such testing has typically been non-automated.

Should it be decided to take a manual sample, rather than a sample from a sample tube 24 on the carousel, valve 81 is then rotated from the positior shown in Figure 3A, and sample is taken through the manual sample probe 28. The actuation switch 11 causes the valves to move to the appropriate positions. In addition, rinse valve 104 is moved from the position shown in Figure 3A. The sample is taken and probe 28 and the associated passages are rinsed and air dried. The rest of the method is as disclosed for the automatic removal of a sample from the sample carcusel.

The disclosed invention is capable of testing 80 to 120 tubes per hour. It is adaptable to test immunophenotyping; leukemia/lymphoma; DNA; red cell, platelet and special hematology testing.

The sample carousel preferably contains 30 to 40 sample tubes, and tubes available as Vacutainers are preferably utilized. Alternatively, other sample holders, such as racks, may be used for the purpose of indexing and mixing the samples. The system may also include bar code scanning, to determine the particular sample. The rinse fluid may be bleach or other types of decontamination fluid. Preferably, the bar code readers are CCD or laser varieties, although others are acceptable. As an example, the reagent bar code reader may be an LED reader. The reagent carousel may typically handle up to 20 different reagents. The disclosed system will typically have a carryover of less than 0.1%. The incubation carousel preferably his 40 tubes suitable for appropriate incubation and processing times at the intended nun ber of tests per hour.

The various mechanical features which have not been disclosed, such as the ability to index the several carousels are as known in the art. Each of the carousels must be able to be indexed such that it is at a known position relative to the various probes. The probes are driven by known mechanisms to move upwardly and downwardly, and also to pivot above their axis. In addition, any of the other various mechanical systems disclosed in this invention utilize known features. The controls necessary to control all of the systems are as known in the art, and form no portion of this invention.

Although the invention is disclosed for useful flow cytometry, other types of analyzers may be incorporated into the system, or used with the inventive sample preparation of this invention. As an example, incubation can possess certain optical features that will, when combined with appropriate detector means, be utilized to test the prepared samples. Further, as is known, the incubation carousel may be shaken to facilitate the mixing of the sample and reagent preparation.

In a further feature of this invention, the reagent probe 38 could also reaspirate a sample from an incubation tube after a period of time, redilute that sample and inject it into another incubation tube. This may be useful for red cell analysis wherein a more dilute sample is necessary. Further, one could operate the system to dispense additional reagent and an increased amount of diluent into the incubation tube for the same purpose. Also, this allows the sample volume to be varied while still using the shear valve 83.

It is also envisioned that the rinsing of the probes can use air bubble injection to minimize the amount of diluent necessary to rinse the system.

Although preferred embodiments of this invention have been disclosed, it should be understood that a worker of ordinary skill in the art would recognize that modifications would come within the scope of this invention. Thus, the following claims should be studied in order to determine the true scope and content of this invention.

## Claims

1. A method of testing a sample fluid comprising the steps of:
a. providing a plurality of samples on a sample carousel (22),
b. providing at least one reagent to form a mixture of said reagent and one of said samples,
c. removing at least a portion of said reagent and one of said samples,
d. dispensing said sample and said reagent into an incubation tube (48) using a diluent mixed with air bubbles,
e. incubating said mixture for a predetermined period of time,
f. removing at least a portion of said mixture from said incubation tube (48) after said predetermined period of time has elapsed and injecting said removed portion of said mixture into a flow cell (162), and
g. testing said removed portion of said mixture.

2. A method as recited in claim 1, including the step of utilizing a single probe (38) to simultaneously dispense said sample and said reagent into said incubation tube (48) wherein said probe aspirates said reagent into a tip (40) of said probe (38) by removing said reagent from a reagent carousel (32), and said sample is delivered to said probe tip (40) from a location upstream of said probe tip (40) and said diluent drives said sample and said reagent outwardly of said probe (38) and into said incubation tube (48), and including the step of mixing air bubbles with said diluent such that said diluent and air drives said sample and said reagent outwardly of said probe tip (40) into said incubation tube (48).

3. A method as recited in claim 2, wherein said sample carousel (22) includes a plurality of closed sample vials (24), and the step of removing at least a portion of said sample from said sample carousel (22) includes removing said portion from one of said sample vials (24) and includes the step of piercing a closure (72) for said sample vial (24) with a needle (68), said needle (68) being communicated to a vent to atmosphere such that upon piercing said closed sample vial (24), the interior pressure is substantially equalized to atmospheric pressure.

4. A method as recited in any one of claims 1-3 including the steps of:
a. providing a diluent container (96) and a diluent pump (94), said diluent pump (94) being operable to flush a removed sample outwardly of a probe (38),
b. injecting a quantity of air into a flow passage (92) communicating with said diluent pump (94) such that said air and diluent act to flush said sample outwardly of said probe (38), and
c. flushing said sample outwardly of said probe (38) by said diluent and said air.

5. A method as recited in claim 4, wherein said probe tip (40) aspirates a quantity of reagent into said probe tip (40) prior to the flushing step and wherein a compressor (99) is connected to said passage (92) which receives said quantity of air, a valve (98) being operable to selectively communicate an output of said compressor (99) to said passage (92), and said valve (98) communicating said compressor (99) to said passage (92) to deliver a quantity of air.

6. The method of claim 5, wherein the valve (98) is cyclically operated to deliver a plurality of air bubbles into said passage (92) and a pair of serial valves are operated sequentially to control the quantity of said air bubbles, whereby the last air bubble is timed such that it is downstream from the end of the diluent flow.

7. A system for testing a plurality of samples comprising:
a. a sample carousel (22) for holding a plurality of sampe vials (24),
b. a sample aspiration system for removing a sample from each of said sample vials (24),
c. a reagent container (32) containing a quantity of reagent,
d. an incubation tube carousel (46) holding a plurality of incubation tubes (48),
e. a flow cell (162) for performing flow cytometry on removed samples,
f. a first probe (38) operable to deliver a quantity of sample removed from one of said sample vials (24) and a quantity of reagent into one of said incubation tubes (48) on said incubation carousel (46),
g. a diluent reservoir (96) and an air compressor (99) to deliver diluent mixed with air bubbles into said first probe (38), and
h. a second probe (50) operable to remove a quantity of said sample and reagent from an incubation tube (48) and deliver said removed sample and reagent to said flow cell (162).

8. A system as recited in claim 7, wherein said flow cell (162) further communicates with a source (158) of sheath fluid and wherein said reagent container (34) includes a reagent carousel (32) having a plurality of reagents mounted thereon, said first probe (38) being operable to aspirate any one of said plurality of reagents into said first probe (38).

## Patentansprüche

1. Verfahren zum Testen einer Flüssigkeitsprobe, mit den folgenden Schritten:
a. Bereitstellen mehrerer Proben auf einem Proben-Karussell (22),
b. Bereitstellen mindestens eines Reagens zur Bildung einer Mixtur aus dem Reagens und einer der Proben,
c. Entfernen mindestens eines Teils des Reagens und einer der Proben,
d. Ausgeben der Probe und des Reagens in eine Inkubationsröhre (48) mittels eines mit Luftblasen gemischten Verdünnungsmitels,
e. Inkubieren der Mixtur für eine vorbestimmte Zeitperiode,
f. Entfernen mindestens eines Teils der Mixtur aus der Inkubationsröhre (48) nach dem Verstreichen der vorbestimmten Zeitperiode und Injizieren des entfernten Teils der Mixtur in eine Durchflusszelle (162), und
g. Testen des entfernten Teils der Mixtur.

2. Verfahren nach Anspruch 1, mit dem Schritt des Verwendens einer einzelnen Sonde (38) zum gleichzeitigen Ausgeben der Probe und des Reagens in die Inkubationsröhre (48), wobei die Sonde das Reagens in einen Endteil (40) der Sonde (38) einsaugt, indem sie das Reagens aus einem Reagens-Karussell (32) entfernt, und die Probe aus einer stromaufwärts des Sonden-Endteils (40) gelegenen Stelle dem Sonden-Endteil (40) zugeführt wird und das Verdünnungsmittel die Probe und das Reagens aus der Sonde (38) heraus und in die Inkubationsröhre (48) treibt, und mit dem Schritt des Mischens von Luftblasen mit dem Verdünnungsmittel derart, dass das Verdünnungsmittel und die Luft die Probe und das Reagens aus dem Sonden-Endteil (40) heraus in die Inkubationsröhre (48) treiben.

3. Verfahren nach Anspruch 2, bei dem das Proben-Karussell (22) mehrere geschlossene Proben-Röhrchen (24) enthält und der Schritt des Entfernens mindestens eines Teils der Probe aus dem Proben-Karussell (22) das Entfernen des Teils aus einem der Probenbehälter (24) und einen Schritt umfasst, in dem ein Verschluss (72) des Proben-Röhrchens (24) mit einer Nadel (68) perforiert wird, wobei die Nadel (68) derart mit einem zur Atmosphäre führenden Lüftungsdurchlass in Verbindung gebracht wird, dass beim Perforieren des geschlossenen Proben-Röhrchens (24) der Innendruck dem Atmosphärendruck im wesentlichen angeglichen wird.

4. Verfahren nach einem der Schritte 1-3, mit den folgenden Schritten:
a. Bereitstellen eines Verdünnungsmittel-Behälters (96) und einer Verdünnungsmittel-Pumpe (94), wobei die Verdünnungsmittel-Pumpe (94) derart betätigbar ist, dass sie eine entfernte Probe aus einer Sonde (38) herausspült,
b. Injizieren einer Luftmenge in einen mit der Verdünnungsmittel-Pumpe (94) verbundenen Durchflussdurchgang (92) derart, dass die Luft und das Verdünnungsmittel das Herausspülen der Probe aus der Sonde (38) bewirken, und
c. Herausspülen der Probe aus der Sonde (38) mittels des Verdünnungsmittels und der Luft.

5. Verfahren nach Anspruch 4, bei dem der Sonden-Endteil (40) vor dem Spül-Schritt eine Reagens-Menge in den Sonden-Endteil (40) saugt, und bei dem mit dem Durchlass (92), der die Luftmenge aufnimmt, ein Kompressor (99) verbunden ist, wobei ein Ventil (98) derart betätigbar ist, dass es selektiv einen Ausgang des Kompressors (99) mit dem Durchlass (92) verbindet, und das Ventil (98) den Kompressor (99) mit dem Durchlass (92) zwecks Zuführung einer Luftmenge verbindet.

6. Verfahren nach Anspruch 5, bei dem das Ventil (98) zyklisch derart betätigt wird, dass mehrere Luftblasen in den Durchlass (92) eingebracht werden, und zum Steuern der Menge der Luftblasen ein Paar serieller Ventile sequentiell betätigt wird, wobei die letzte Luftblase zeitlich derart gesteuert wird, dass sie sich stromabwärts von dem Ende des Verdünnungsmittel-Stroms befindet.

7. System zum Testen mehrerer Proben, mit:
a. einem Proben-Karussell (22) zum Halten mehrerer Proben-Röhrchen (24),
b. einem Proben-Ansaugsystem zum Entfernen einer Probe aus jedem der Proben-Röhrchen (24),
c. einem Reagens-Behälter (32), der eine Reagens-Menge enthält,
d. einem Inkubationsröhrchen-Karussell (46), das mehrere Inkubationsröhrchen (48) hält,
e. einer Durchflusszelle (162) zum Durchführen einer Durchflusszytometrie an Proben, die entfernt worden sind,
f. einer ersten Sonde (38), die zum Zuführen einer aus einem der Proben-Röhrchen (24) entfernten Proben-Menge und einer Reagens-Menge in eines der auf dem Inkubationsröhrchen-Karussell (46) befindlichen Inkubationsröhrchen (48) betätigbar ist,
g. einem Verdünnungsmittel-Reservoir (96) und einem Luftkompressor (99) zum Zuführen von mit Luftblasen gemischtem Verdünnungsmittel in die erste Sonde (38), und
h. einer zweiten Sonde (50), die zum Entfernen einer Merge der Probe und des Reagens aus einem Inkubationsröhrchen (48) und zum Zuführen der entfernten Probe- und Reagensmenge an die Durchflusszelle (162) betätigbar ist.

8. System nach Anspruch 7, bei dem die Durchflusszelle (162) ferner mit einer Quelle (158) eines Hüllfluids verbunden ist und bei dem der Reagens-Behälter (34) ein Reagens-Karussell (32) mit mehreren daran angeordneten Reagenzien aufweist, wobei die erste Sonde (38) zum Saugen jedes der mehreren Reagenzien in die erste Sonde (38) betätigbar ist.

## Revendications

1. Procédé d'analyse d'un fluide par échantillons, comportant les étapes qui consistent à:
a. prévoir plusieurs échantillons sur un plateau tournant support d'échantillons (22),
b. prévoir au moins un réactif afin de former un mélange dudit réactif et de l'un desdits échantillons,
c. prélever au moins une partie dudit réactif et l'un desdits échantillons,
d. distribuer ledit échantillon et ledit réactif dans un tube à incubation (48) en utilisant un diluant mélangé à des bulles d'air,
e. laisser incuber ledit mélange sur une période de temps prédéterminée,
f. prélever au moins une partie dudit mélange dudit tube à incubation (48), après que ladite période de temps prédéterminée a expiré, et injecter ladite partie prélevée dudit mélange dans une cellule à écoulement (162), et
g. analyser ladite partie prélevée dudit mélange.

2. Procédé tel que défini dans la revendication 1, comprenant l'étape qui consiste à mettre en oeuvre une sonde unique (38) pour distribuer simultanément ledit échantillon et ledit réactif dans ledit tube à incubation (48), ladite sonde aspirant alors ledit réactif à l'intérieur d'une pointe (40) de ladite sonde (38) en prélevant ledit réactif sur un plateau tournant support de réactif (32), alors que ledit échantillon est délivré à ladite pointe de sonde (40) à partir d'un point situé en amont de ladite pointe de son le (40), ledit diluant déplaçant alors ledit échantillon et ledit réactif vers l'extérieur de ladite sonde (38) et jusqu'à l'intérieur dudit tube à incuba ion (48), le procédé comprenant également l'étape qui consiste à mélanger des bulles d'air avec ledit diluant afin que ledit diluant et l'air déplacent ledit échantillon et ledit réactif vers l'extérieur de ladite pointe de sonde (40), jusqu'à l'intérieur dudit tube à incubation (48).

3. Procédé tel que défini dans la revendication 2, selon lequel ledit plateau tournant support d'échantillons (22) comprend plusieurs fioles à échantillon fermées (24), et l'étape qui consiste à prélever au moins une partie dudit échantillon sur ledit plateau tournant support d'échantillons (22) comprend le prélèvement de ladite partie dans l'une desdites fioles à échantillon (24) et comprend l'étape consistant à percer un élément de fermeture (72) de ladite fiole à échantillon (24) avec une aiguille (68), ladite aiguille (68) étant mise en communication avec un orifice de mise à l'atmosphère afin que lorsque ladite fiole à échantillon fermée (24) est percée, la pression interne soit rendue sensiblement égale à la pression atmosphérique.

4. Procédé tel que défini dans l'une quelconque des revendications 1 à 3, comprenant les étapes qui consistent à:
a. prévoir un récipient à diluant (96) et une pompe à diluant (94), ladite pompe à diluant (94) étant susceptible d'intervenir pour chasser un échantillon, qui a été prélevé, vers l'extérieur d'une sonde (38),
b. injecter une certaine quantité d'air dans un passage d'écoulement (92) communiquant avec ladite pompe à diluant (94), afin que ledit air et ledit diluant agissent pour chasser ledit échantillon vers l'extérieur de ladite sonde (38), et
c. expulser ledit échantillon de ladite sonde (38) en le chassant à l'extérieur de celle-ci à l'aide dudit diluant et dudit air.

5. Procédé tel que défini dans la revendication 4, selon lequel ladite pointe de sonde (40) aspire une certaine quantité de réactif à l'intérieur de ladite pointe de sonde (40) avant l'étape d'expulsion, et selon lequel un compresseur (99) est raccordé audit passage (92) qui reçoit ladite quantité d'air, une vanne (98) pouvant être actionnée pour faire communiquer sélectivement une sortie dudit compresseur (99) avec ledit passage (92), et ladite vanne (98) faisant communiquer ledit compresseur (99) avec ledit passage (92) afro de délivrer une certaine quantité d'air.

6. Procédé selon la revendication 5, selon lequel la vanne (98) est actionnée cycliquement de façon à délivrer une multiplicité de bulles d'air dans ledit passage (92) et deux vannes, montées en série, sont actionnées successivement de façon à commander la quantité desdites bulles d'air, la dernière bulle d'air étant délivrée à un instant tel, qu'elle soit en aval de l'extrémité du flux de diluant.

7. Système pour analyser une multiplicité d'échantillons, comportant:
a. un plateau tournant support d'échantillons (22) destiné à retenir une multiplicité de fioles à échantillon (24),
b. un système d'aspiration d'échantillon destiné à prélever un échantillon dans chacune desdites fioles à échantillon (24),
c. un récipient à réactif (32) contenant une certaine quantité de réactif,
d. un plateau tournant support de tubes à incubation (46) retenant plusieurs tubes à incubation (48),
e. une cellule à écoulement (162) pour l'exécution d'une cytométrie de flux sur des échantillons prélervés,
f. une première sonde (38) susceptible d'intervenir pour délivrer une certaine quantité d'échantillon prélevé dans l'une desdites fioles à échantillon (24) et une certaine quantité de réactif, à l'intérieur de l'un desdits tubes à incubation (48) présents sur ledit plateau tournant d'incubation (46),
g. un réservoir à diluant (96) et un compresseur d'air (99) permettant de délivrer du diluant, mélangé à des bulles d'air, à l'intérieur de ladite première sonde (3 8), et
h. une seconde sonde (50) susceptible d'intervenir pour prélever une certaine quantité dudit échamillon et dudit réactif dans un tube à incubation (48) et de délivrer ledit échantillon et ledit réactif, qui ont été prélevés, à ladite cellule à écoulement (162).

8. Système tel que défini dans la revendication 7, dans lequel ladite cellule à écoulement (162) communique, en outre, avec une source (158) de fluide protecteur et dans lequel ledit récipient à réactif (34) comprend un plateau tournant support de réactifs (32) sur lequel sont mis en place plusieurs réactifs, ladite première sonde (38) étant susceptible d'intervenir pour aspirer l'un quelconque desdits plusieurs réactifs à l'intérieur de ladite première sonde (38).
